# FASCICULE DE BREVET EUROPEEN

(11) **EP 2 783 129 B1**
(45) Date de publication et mention de la délivrance du brevet: **20.04.2016**
(21) Numéro de dépôt: 12791520.5
(22) Date de dépôt: 23.10.2012
(51) Int. Cl.: F16F 15/123

(54) **AMORTISSEUR DE TORSION POUR UN EMBRAYAGE, EN PARTICULIER DE VEHICULE AUTOMOBLIE**
DREHUNGSUNTERDRÜCKUNGSVORRICHTUNG FÜR EINE KUPPLUNG, INSBESONDERE EINES KRAFTFAHRZEUGES
TORSION DAMPER FOR A CLUTCH, PARTICULARLY OF A MOTOR VEHICLE

(30) Priorité: 21.11.2011 FR 1160606
(43) Date de publication de la demande: 01.10.2014
(73) Titulaire: Valeo Embrayages, 80009 Amiens Cedex 2 (FR)
(72) Inventeur: CAUMARTIN, Laurent, F-80600 Beauquesne (FR); THEOBALT, Marc, F-80260 Montagny sur l'Hallue (FR)
(74) Mandataire: Cardon, Nicolas
(86) Numéro de dépôt international: PCT/FR2012/052434
(87) Numéro de publication internationale: WO 2013/076396

(56) Documents cités:
- CH-A5- 607 642
- FR-A1- 2 496 799
- FR-A1- 2 732 425
- US-A- 2 097 627
- US-A- 2 613 785
- US-A- 5 769 722

## Description

La présente invention concerne un amortisseur de torsion pour un embrayage, en particulier de véhicule automobile, à l'exemple de celui décrit dans le document FR 2 732 425-A1.

Un tel amortisseur de torsion comprend classiquement un moyeu, un voile annulaire radial et deux rondelles de guidage s'étendant radialement de part et d'autre du voile annulaire, reliées fixement entre elles et mobiles en rotation par rapport au voile annulaire.

Dans un amortisseur de torsion à structure symétrique, un disque de friction est fixé sur le voile annulaire, le moyeu étant alors couplé aux rondelles de guidage. A l'inverse, dans un amortisseur de torsion à structure asymétrique, le disque de friction est couplé aux rondelles de guidage, le moyeu étant alors couplé au voile annulaire. Dans les deux cas, le moyeu est en général couplé à un arbre d'entrée d'une boite de vitesses.

Des organes élastiques et des moyens de friction sont montés entre les rondelles de guidage et le voile annulaire pour absorber et amortir les vibrations et les acyclismes de rotation. Les organes élastiques sont le plus souvent des ressorts hélicoïdaux agencés circonférentiellement et reliant le voile annulaire aux rondelles de guidage. Les moyens de friction comportent généralement des rondelles de frottement et des rondelles élastiques montées autour du moyeu et serrées entre le voile annulaire et les rondelles de guidage.

Chaque rondelle de guidage comporte des fenêtres de montage des organes élastiques. Ces fenêtres sont préférentiellement situées à proximité de la périphérie externe de la rondelle de guidage correspondante afin d'augmenter la longueur des organes élastiques, et donc le débattement angulaire du voile annulaire par rapport aux rondelles de guidage, ce qui permet d'améliorer l'efficacité de l'amortisseur de torsion.

Les périphéries externes des rondelles de guidage sont soumises à des contraintes importantes dues aux efforts centrifuges lors de la rotation de l'amortisseur de torsion en fonctionnement. Ces contraintes sont proportionnelles à la masse des organes élastiques. Si l'on souhaite disposer d'organes élastiques capables de transmettre des couples importants ou si l'on souhaite augmenter les performances de l'amortisseur de torsion, il peut être nécessaire d'augmenter le diamètre et/ou la longueur des organes élastiques, et donc d'augmenter leur masse et les efforts centrifuges générés en fonctionnement. Afin d'éviter toute dégradation des rondelles de guidage, il est alors nécessaire, soit de rapprocher les organes élastiques du moyeu, ce qui nuirait à l'efficacité de l'amortisseur de torsion, soit d'augmenter le diamètre des rondelles de guidage, ce qui est souvent impossible compte tenu des encombrements imposés.

En outre, les couples importants transmis par l'amortisseur de torsion peuvent entraîner une flexion du voile annulaire et, par conséquent, une usure et une perte d'efficacité des moyens de friction disposés entre les rondelles de guidage et le voile annulaire. Dans l'art antérieur, la forme des rondelles de guidage ne permet pas de limiter la flexion du voile.

L'invention a notamment pour but d'apporter une solution simple, efficace et économique à ces problèmes.

A cet effet, elle propose un amortisseur de torsion pour un embrayage, en particulier de véhicule automobile, comprenant un moyeu, un voile annulaire radial, deux rondelles de guidage s'étendant radialement de part et d'autre du voile annulaire, reliées fixement entre elles et mobiles en rotation par rapport au voile annulaire, le moyeu étant couplé au voile annulaire ou aux rondelles de guidage, et des organes élastiques et des moyens de friction montés entre les rondelles de guidage et le voile annulaire pour absorber et amortir les vibrations et les acyclismes de rotation, le voile annulaire et chaque rondelle de guidage comportant des fenêtres de montage des organes élastiques, situées à proximité de leur périphérie externe, caractérisé en ce que chaque rondelle de guidage comporte une périphérie externe formée d'un rebord recourbé en direction du voile annulaire et dont la face interne, tournée vers le voile annulaire, est destinée à l'appui des organes élastiques en fonctionnement, le bord périphérique externe du rebord étant la zone de la rondelle de guidage la plus proche du voile annulaire.

Le rebord recourbé vers l'intérieur des rondelles de guidage, c'est-à-dire en direction du voile annulaire, permet de rigidifier la périphérie externe des rondelles de guidage tout en présentant un encombrement radial réduit. En fonctionnement, les organes élastiques peuvent se déformer sous l'effet de la force centrifuge et venir se plaquer contre la face interne du rebord. Cette face interne est par exemple annulaire et comporte une partie en portion de sphère, de même rayon que les organes élastiques.

Le bord périphérique externe du rebord, c'est-à-dire le bord libre de ce rebord, est tourné vers le voile annulaire et sert de butée afin de limiter la flexion du voile en fonctionnement. On évite ainsi la dégradation des moyens de friction.

Des rondelles de guidage présentant une telle structure peuvent être réalisées facilement par emboutissage.

Selon une caractéristique de l'invention, un disque de friction est fixé sur le voile annulaire, le moyeu étant couplé aux rondelles de guidage.

L'amortisseur de torsion est donc du type symétrique.

De manière préférée, le disque de friction est fixé au voile annulaire par l'intermédiaire des rivets, le rebord délimitant au moins une cavité s'étendant circonférentiellement sur tout ou partie de la rondelle de guidage et tournée du côté du voile annulaire, les rivets étant logés dans ladite cavité ou situés en regard de ladite cavité.

Selon une autre caractéristique de l'invention, chaque rondelle de guidage comporte des parties renfoncées en direction du voile annulaire, s'étendant entre les extrémités circonférentielles des fenêtres des rondelles de guidage et formant des appuis pour les organes élastiques.

En particulier, les organes élastiques sont montés dans les fenêtres par groupes d'au moins deux organes élastiques coaxiaux, respectivement un organe élastique interne et un organe élastique externe, et les parties renfoncées s'étendent en regard des extrémités desdits organes élastiques interne et externe, de façon à former des surfaces d'appui de ces extrémités.

Avantageusement, chaque rondelle de guidage comporte une périphérie externe dont la section radiale est de forme générale en S de façon à former un rebord radialement externe, dont la face interne est concave et délimite une cavité tournée vers le voile annulaire, et des renfoncements radialement internes par rapport audit rebord, destinés à former des butées d'appui des organes élastiques, les fenêtres des rondelles de guidage comportant des bords radialement internes et externes, situés respectivement radialement à l'intérieur et à l'extérieur desdits renfoncements.

Les rebords en S peuvent être réalisés sans difficulté particulière par emboutissage.

Les bords radialement externes des fenêtres des rondelles de guidage sont, de préférence, situés au niveau du sommet du rebord externe délimitant la cavité, c'est-à-dire au niveau de la zone du rebord qui est la plus écartée du voile annulaire.

Avantageusement, le bord périphérique externe du rebord est écarté du voile annulaire d'une distance comprise entre 0,5 et 2 mm.

De plus, les rebords des rondelles de guidage peuvent s'étendre de manière continue sur toute la circonférence des rondelles de guidage, de façon à renforcer efficacement toute la périphérie externe des rondelles de guidage.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe axiale d'un amortisseur de torsion de l'art antérieur,
- la figure 2 est une vue en coupe axiale d'un amortisseur de torsion selon l'invention,
- la figure 3 est une vue en perspective de l'amortisseur de torsion de la figure 2,
- la figure 4 est une vue de détail, en perspective, de l'amortisseur des figures 2 et 3,
- la figure 5 est une vue de détail, en coupe axiale, illustrant l'appui des organes élastiques sur les parties renfoncées des rondelles de guidage,
- la figure 6 est une vue de détail, en coupe axiale, illustrant le logement des moyens de fixation du disque de friction sur le voile annulaire, à l'intérieur des cavités correspondantes des rondelles de guidage,
- la figure 7 est une vue de détail et en coupe axiale, illustrant les moyens de friction de l'amortisseur de torsion.

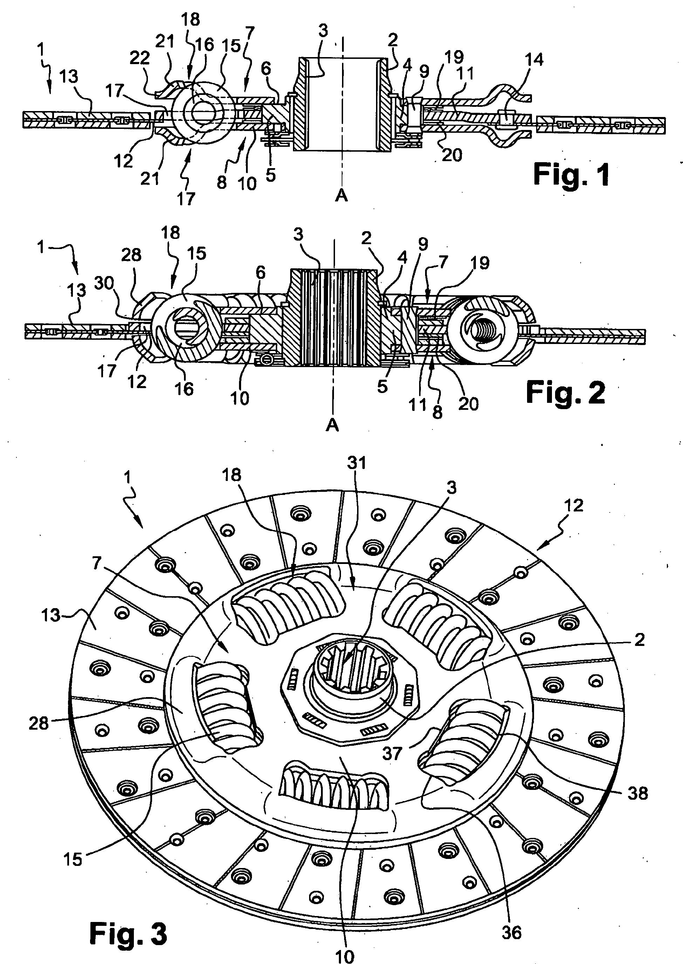

La figure 1 représente un amortisseur de torsion 1 de l'art antérieur comportant un moyeu central 2 à surface cannelée interne 3 destinée à être couplée à un arbre d'entrée d'une boîte de vitesses, une pièce de liaison 4 étant rapportée sur le moyeu 2. La pièce de liaison comporte une collerette radiale 5 définissant deux faces d'appui 6 radiales opposées. Des rondelles de guidage 7, 8 sont fixées sur le moyeu 2 par des rivets 9, chaque rondelle 7, 8 comportant une partie radiale 10 dont la périphérie interne vient en appui contre une face 6 de la collerette 5. Un voile annulaire 11 est monté autour du moyeu 2, entre les rondelles de guidage 7, 8 se faisant face l'une par rapport à l'autre, le voile annulaire 11 étant mobile en rotation par rapport aux rondelles de guidage 5, 6 et au moyeu 2. Un disque de friction 12 portant des garnitures de friction 13 est fixé au moyen de rivets 14 sur le voile annulaire 11.

L'amortisseur de torsion comporte ainsi deux parties mobiles l'une par rapport à l'autre, aptes à pivoter sur une plage angulaire déterminée autour de l'axe A du moyeu, à savoir les rondelles de guidage 7, 8 et le moyeu 2, d'une part, et le voile annulaire 11 et le disque de friction 12, d'autre part. Un tel amortisseur de torsion est du type symétrique.

Des ressorts hélicoïdaux 15, 16 de compression sont montés dans des fenêtres 17, 18 du voile annulaire 11 et des rondelles de guidage 7, 8, les extrémités des ressorts 15, 16 étant destinées à venir s'appuyer sur les bords radiaux des extrémités des fenêtres du voile annulaire 11 et des rondelles de guidage 7, 8. Les ressorts hélicoïdaux sont répartis circonférentiellement autour de l'axe A du moyeu 2.

En particulier, l'amortisseur de torsion 1 comporte des ressorts internes 16, montés dans des ressorts externes 15 coaxiaux, chaque ensemble ressort interne 16 - ressort externe 15 étant monté dans des fenêtres 17, 18 du voile annulaire 11 et des rondelles de guidage 7, 8.

Les fenêtres 17, 18 sont ménagées au voisinage de la périphérie externe du voile annulaire 11 et des rondelles de guidage 7, 8. Dans l'art antérieur et dans un exemple, pour un voile et une rondelle de guidage d'une friction TG présentant chacun un diamètre de 252 mm, le contour externe de la fenêtre du voile est positionné à 5 mm du contour externe et le contour externe de la fenêtre de la rondelle de guidage est positionné à 15 mm du contour externe. Dans un exemple de l'invention, pour un voile et une rondelle de guidage d'une friction HTLS présentant respectivement un diamètre de 285 mm et de 281 mm, le contour de la fenêtre du voile est positionné à 7,5 mm du contour externe et le contour externe de la fenêtre de la rondelle de guidage est positionné à 20 mm du contour externe.

Des moyens de friction 19, 20 sont en outre disposés entre chacune des rondelles de guidage 7, 8 et le voile annulaire 11.

Les ressorts 15, 16 et les moyens de friction 19, 20 permettent, comme cela est connu en soi, d'absorber et d'amortir les vibrations et les acyclismes de rotation.

Chaque rondelle de guidage 7, 8 est formée d'une tôle emboutie d'épaisseur globalement constante et comporte une partie radiale annulaire 10 située radialement à l'intérieur, prolongée par une partie bombée annulaire 21 et de section radiale en U, elle-même prolongée par un rebord annulaire externe radial 22.

La forme des rondelles de guidage 7, 8 et le positionnement des fenêtres 18 permettent, à la fois au ressort interne 16 et au ressort externe 15, de s'appuyer sur les rondelles de guidage 7, 8.

Comme indiqué précédemment, les périphéries radialement externes 21, 22 des rondelles de guidage 7, 8 sont soumises à des contraintes importantes dues aux efforts centrifuges lors de la rotation de l'amortisseur de torsion 1 en fonctionnement.

Une telle structure n'est pas suffisamment résistante pour pouvoir être utilisée avec des ressorts de grand diamètre.

En outre, cette structure ne permet pas de limiter la flexion du voile annulaire 11, et donc d'éviter les dégradations des moyens de friction 19, 20. En effet, la périphérie externe 21, 22 des rondelles de guidage 7, 8 est écartée du voile annulaire 11 et ne permet pas de limiter sa flexion.

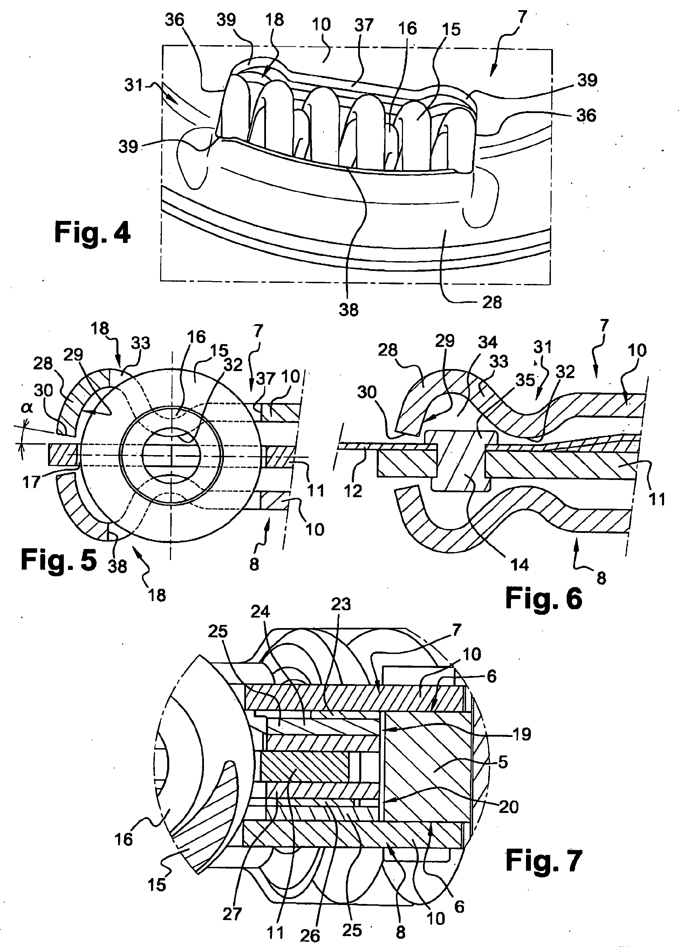

Les figures 2 à 7 représentent un amortisseur de torsion 1 selon l'invention, comportant, comme précédemment, un moyeu central 2 à surface cannelée interne 3 destinée à être couplée à un arbre d'entrée d'une boîte de vitesses, une pièce de liaison 4 étant rapportée sur le moyeu. La pièce de liaison 4 comporte une collerette radiale 5 définissant deux faces d'appui radiales opposées 6. Des rondelles de guidage 7, 8 sont fixées sur le moyeu 2, au moyen de rivets 9, chaque rondelle 7, 8 comportant une partie radiale 10 dont la périphérie interne vient en appui contre une face 6 de la collerette 5. Un voile annulaire 11 est monté autour du moyeu 2, entre les rondelles de guidage 7, 8 se faisant face l'une par rapport à l'autre, le voile annulaire 11 étant mobile en rotation par rapport aux rondelles de guidage 7, 8 et au moyeu 2. Un disque de friction 12 portant des garnitures de friction 13 est fixé par des rivets 14 sur le voile annulaire (figure 6).

L'amortisseur de torsion 1 comporte ainsi deux parties mobiles l'une par rapport à l'autre, aptes à pivoter sur une plage angulaire déterminée autour de l'axe du moyeu, à savoir les rondelles de guidage 7, 8 et le moyeu 2, d'une part, et le voile annulaire 11 et le disque de friction 12, d'autre part.

Comme dans l'art antérieur, des ressorts hélicoïdaux 15, 16 de compression sont montés dans des fenêtres 17, 18 du voile annulaire 11 et des rondelles de guidage 7, 8. En fonctionnement, les extrémités des ressorts 15, 16 s'appuient sur le voile annulaire 11 et sur les rondelles de guidage 7, 8. Les ressorts hélicoïdaux 15, 16 sont répartis circonférentiellement autour de l'axe A du moyeu.

En particulier, le voile annulaire 11 et chacune des rondelles de guidage 7, 8 comporte cinq fenêtres 17, 18, destinées à accueillir chacune un groupe de ressorts 15, 16. Chaque groupe comporte deux ressorts hélicoïdaux-coaxiaux montés l'un à l'intérieur de l'autre, à savoir un ressort externe 15 et un ressort interne 16 monté dans le ressort externe 15.

Les fenêtres 17, 18 sont ménagées au voisinage de la périphérie externe du voile annulaire 11 et des rondelles de guidage 7, 8.

Des moyens de friction 19, 20 sont en outre disposés entre chacune des rondelles de guidage 7, 8 et le voile annulaire 11. Comme cela est visible à la figure 7, des premiers moyens de friction 19 sont montés entre l'une 7 des rondelles de guidage et le voile annulaire 11, des seconds moyens de friction 20 étant montés entre l'autre 8 des rondelles de guidage et le voile annulaire 11.

Les premiers moyens de friction 19 comportent, de la rondelle de guidage 7 vers le voile annulaire 11, une rondelle élastique 23 de type rondelle Belleville, une rondelle d'application 24 en acier, et une rondelle de frottement 25.

Les seconds moyens de friction 20 comportent, de la rondelle de guidage 8 vers le voile annulaire 11, une rondelle de frottement 25, une rondelle d'hystérésis variable 26 et une autre rondelle de frottement 27.

De tels moyens de friction 19, 20 sont connus de l'art antérieur et leur fonctionnement ne sera pas décrit en détail. Les ressorts 15, 16 et les moyens de friction 19, 20 permettent d'absorber et d'amortir les vibrations et les acyclismes de rotation.

On s'intéressera dans ce qui suit à la forme des rondelles de guidage.

Chaque rondelle de guidage 7, 8 comporte une partie radialement interne 10 qui s'étend radialement, destinée à être fixée au moyeu 2, prolongée par une partie radialement externe dont la section radiale est de forme générale en S, mieux visible à la figure 6 notamment.

Plus particulièrement, la partie radialement externe comporte un rebord externe 28 recourbé en direction du voile annulaire 11, la face interne 29 dudit rebord (c'est-à-dire tournée vers le voile annulaire 11) étant destinée à l'appui des organes élastiques 15 en fonctionnement. Le bord périphérique externe 30 du rebord 28, c'est-à-dire son bord libre ou la face définissant le bord libre, est tourné en direction du voile annulaire 11 et forme un angle α compris entre 0 et 20° avec le plan radial.

On rappelle que, dans l'art antérieur, ce bord libre est orienté radialement vers l'extérieur et non vers le voile annulaire 11.

Dans l'invention, le rebord 28 s'étend de manière continue sur toute la circonférence de la rondelle de guidage correspondante 7, 8.

Ce rebord 28 est en outre prolongé radialement vers l'intérieur par des renfoncements 31 destinés à former des butées d'appui des organes élastiques 15, 16. Ces renfoncements 31 ont une section en forme générale de U ou de Oméga dont un bord est relié au bord radialement interne du rebord 28 précité et dont l'autre bord est relié à la partie radialement interne 10 de la rondelle de guidage. La base du U définit une paroi interne convexe 32 tournée vers le voile annulaire 11.

Le rebord 28 délimite, avec les parties radialement externes 33 des renfoncements 31, des cavités 34 (figure 6) situées entre les extrémités des groupes de ressorts 15, 16 et servant au logement des têtes 35 des rivets 14 ou situées en regard de celles-ci.

Comme cela est mieux visible à la figure 4, les fenêtres 18 des rondelles de guidage 7, 8 comportent des extrémités circonférentielles 36 et des bords radialement internes 37 et externes 38, situés respectivement radialement à l'intérieur et à l'extérieur desdits renfoncements 31. Les zones de raccordement entre les extrémités circonférentielles 36 et les bords radialement internes et externes 37, 38 comportent des dégagements 39 arrondis ayant un rayon de raccordement suffisamment important pour limiter les effets de concentration de contraintes.

Comme cela est mieux visible à la figure 5, les bords radialement externes 38 des fenêtres 18 sont situés au niveau du sommet du rebord externe 28 délimitant la cavité 34, c'est-à-dire au niveau de la zone du rebord 28 qui est la plus écartée du voile annulaire 11. Les bords radialement internes 37 des fenêtres 18 sont situés dans la partie radialement interne 10 de chaque rondelle de guidage 7, 8.

Les renfoncements 31 s'étendent ainsi entre les extrémités circonférentielles 36 des fenêtres 18.

La forme et les dimensions des renfoncements 31 sont telles que ces renfoncements 31 s'étendent en regard des extrémités de chacun des ressorts externe et interne 15, 16, de façon à pouvoir former des surfaces d'appui de chacune de ces extrémités.

Le bord périphérique externe 30 du rebord 28 est écarté du voile annulaire 11 d'une distance inférieure à l'écartement entre la partie radialement interne 10 des rondelles de guidage 7, 8 et le voile annulaire 11, et d'une distance inférieure à l'écartement entre les renfoncements 11 des rondelles de guidage 7, 8 et le voile annulaire 11. En d'autres termes, les bords périphériques externes 30 (ou bord libre) du rebord 28, sont les zones des rondelles de guidage 7, 8 qui sont les plus proche du voile annulaire 11.

Plus particulièrement, le bord périphérique externe 30 du rebord 28 est écarté du voile annulaire 11 d'une distance comprise entre 0,5 et 2 mm.

De cette manière, en fonctionnement et en cas de flexion du voile annulaire 11, la déformation du voile annulaire 11 est limitée par butée sur les bords périphériques externes 30 des deux rondelles de guidage 7, 8. Ainsi, comme expliqué précédemment, on évite une dégradation des moyens de friction 19, 20.

Une telle structure peut être combinée à des formes embouties sphériques telles que représentées dans le document FR 2 678 337 au nom de la Demanderesse et situées au niveau des zones de accordement entre les bords radialement internes et externes 37, 38 des fenêtres 18 des rondelles de guidage 7, 8 et les extrémités 36 desdites fenêtres 7, 8.

L'invention propose ainsi un amortisseur de torsion 1 pouvant être équipé d'organes élastiques 15, 16 de grand diamètre et offrant des performances accrues, tout en évitant un risque de détérioration des rondelles de guidage 7, 8 et des moyens de friction 19, 20. En effet, la structure des rondelles de guidage 7, 8 leur confère une grande rigidité au niveau de leur périphérie radialement externe, sans toutefois nécessiter un encombrement radial important.

## Revendications

1. Amortisseur de torsion (1) pour un embrayage, en particulier de véhicule automobile, comprenant un moyeu (2), un voile annulaire radial (11), deux rondelles de guidage (7, 8) s'étendant radialement de part et d'autre du voile annulaire (11), reliées fixement entre elles et mobiles en rotation par rapport au voile annulaire (11), le moyeu (2) étant couplé au voile annulaire (11) ou aux rondelles de guidage (7, 8), et des organes élastiques (15, 16) et des moyens de friction (19, 20) montés entre les rondelles de guidage (7, 8) et le voile annulaire (11) pour absorber et amortir les vibrations et les acyclismes de rotation, le voile annulaire (11) et chaque rondelle de guidage (7, 8) comportant des fenêtres (17, 18) de montage des organes élastiques (15, 16), situées à proximité de leur périphérie externe, **caractérisé en ce que** chaque rondelle de guidage (7, 8) comporte une périphérie externe formée d'un rebord recourbé (28) en direction du voile annulaire (11) et dont la face interne (29), tournée vers le voile annulaire (11), est destinée à l'appui des organes élastiques (15, 16) en fonctionnement, le bord périphérique externe (30) du rebord (28) étant la zone de la rondelle de guidage (7, 8) la plus proche du voile annulaire (11).

2. Amortisseur de torsion (1) selon la revendication 1, **caractérisé en ce qu'**un disque de friction (12) est monté sur le voile annulaire (11), le moyeu (2) étant couplé aux rondelles de guidage (7, 8).

3. Amortisseur de torsion (1) selon la revendication 2, **caractérisé en ce que** le disque de friction (12) est fixé au voile annulaire (11) par des rivets (14), le rebord (28) délimitant au moins une cavité (34) s'étendant circonférentiellement sur tout ou partie de la rondelle de guidage (7, 8) et tournée du côté du voile annulaire (11), les rivets (14) étant logés dans ladite cavité (34) ou situés en regard de ladite cavité (34).

4. Amortisseur de torsion (1) selon l'une des revendications 1 à 3, **caractérisé en ce que** chaque rondelle de guidage (7, 8) comporte des parties (31) renfoncées en direction du voile annulaire (11), s'étendant entre les extrémités circonférentielles (36) des fenêtres (18) de la rondelle de guidage (7, 8) et formant des appuis pour les organes élastiques (15, 16).

5. Amortisseur de torsion (1) selon la revendication 4, **caractérisé en ce que** les organes élastiques (15, 16) sont montés dans les fenêtres (17, 18) par groupes d'au moins deux organes élastiques coaxiaux, respectivement un organe élastique interne (16) et un organe élastique externe (15), et **en ce que** les parties renfoncées (31) s'étendent en regard des extrémités desdits organes élastiques interne et externe (16, 15), de façon à former des surfaces d'appui de ces extrémités.

6. Amortisseur de torsion (1) selon l'ensemble des revendications 3 et 4, **caractérisé en ce que** chaque rondelle de guidage (7, 8) comporte une périphérie externe dont la section radiale est de forme générale en S de façon à former un rebord (28) radialement externe, dont la face interne (29) est concave et délimite une cavité (34) tournée vers le voile annulaire (11), et des renfoncements (31) radialement interne par rapport audit rebord (28), destinés à former des butées d'appui des organes élastiques (15, 16), les fenêtres (18) des rondelles de guidage (7, 8) comportant des bords radialement internes et externes (37, 38), situés respectivement radialement à l'intérieur et à l'extérieur dudit renfoncement (31).

7. Amortisseur de torsion (1) selon la revendication 6, **caractérisé en ce que** les bords radialement externes (38) des fenêtres (18) des rondelles de guidage (7, 8) sont situés au niveau du sommet du rebord externe (28) délimitant la cavité (34), c'est-à-dire au niveau de la zone du rebord qui est la plus écartée du voile annulaire (11).

8. Amortisseur selon l'une des revendications 1 à 7, **caractérisé en ce que** le bord périphérique externe (30) du rebord (28) est écarté du voile annulaire (11) d'une distance comprise entre 0,5 et 2 mm.

9. Amortisseur de torsion selon l'une des revendications 1 à 8, **caractérisé en ce que** les rebords (28) des rondelles de guidage (7, 8) s'étendent de manière continue sur toute la circonférence des rondelles de guidage (7, 8).

## Patentansprüche

1. Drehungsunterdrückungsvorrichtung (1) für eine Kupplung, insbesondere für ein Kraftfahrzeug, die eine Nabe (2), ein ringförmiges radiales Glied (11), zwei Führungsunterlegscheiben (7, 8), die sich radial zu beiden Seiten des ringförmigen Glieds (11) erstrecken, die stationär miteinander und in Drehung in Bezug auf das ringförmige Glied (11) verbunden sind, umfasst, wobei die Nabe (2) mit dem ringförmigen Glied (11) oder mit den Führungsunterlegscheiben (7, 8) gekuppelt ist, und elastische Organe (15, 16) und Reibungsmittel (19, 20), die zwischen die Führungsunterlegscheiben (7, 8) und das ringförmige Glied (11) montiert sind, um Vibrationen und Drehungsungleichförmigkeiten zu absorbieren und zu dämpfen, wobei das ringförmige Glied (11) und jede Führungsunterlegscheibe (7, 8) Fenster (17, 18) zur Montage der elastischen Organe (15, 16) umfassen, die sich in der Nähe ihres externen Umfangs befinden, **dadurch gekennzeichnet, dass** jede Führungsunterlegscheibe (7, 8) einen externen Umfang umfasst, der aus einer Krempe (28) gebildet ist, die in Richtung des ringförmigen Glieds (11) umgebogen ist und deren Innenseite (29), die zu dem ringförmigen Glied (11) gekehrt ist, zum Aufliegen der elastischen Organe (15, 16) beim Betrieb bestimmt ist, wobei der externe umfängliche Rand (30) der Krempe (28) die Zone der Führungsunterlegscheibe (7, 8), die dem ringförmigen Glied (11) am nächsten liegt, ist.

2. Drehungsunterdrückungsvorrichtung (1) nach Anspruch 1, **dadurch gekennzeichnet, dass** eine Reibungsscheibe (12) auf das ringförmige Glied (11) montiert ist, wobei die Nabe (2) mit den Führungsunterlegscheiben (7, 8) gekuppelt ist.

3. Drehungsunterdrückungsvorrichtung (1) nach Anspruch 2, **dadurch gekennzeichnet, dass** die Reibungsscheibe (12) an dem ringförmigen Glied (11) durch Nieten (14) befestigt ist, wobei die Krempe (28) mindestens einen Hohlraum (34) abgrenzt, der sich umfänglich auf der ganzen oder einem Teil der Führungsunterlegscheibe (7, 8) erstreckt, die/der zu der Seite des ringförmigen Glieds (11) gekehrt ist, wobei die Nieten (14) in dem Hohlraum (34) aufgenommen sind oder gegenüber dem Hohlraum (34) liegen.

4. Drehungsunterdrückungsvorrichtung (1) nach einem der Ansprüche 1 bis 3, **dadurch gekennzeichnet, dass** jede Führungsunterlegscheibe (7, 8) Teile (31) umfasst, die in Richtung des ringförmigen Glieds (11) vertieft sind, die sich zwischen den umfänglichen Enden (36) der Fenster (18) der Führungsunterlegscheibe (7, 8) erstrecken und Auflagen für die elastischen Organe (15, 16) bilden.

5. Drehungsunterdrückungsvorrichtung (1) nach Anspruch 4, **dadurch gekennzeichnet, dass** die elastischen Organe (15, 16) in die Fenster (17, 18) in Gruppen zu mindestens zwei koaxialen elastischen Organen montiert sind, jeweils ein internes elastisches Organ (16) und ein externes elastisches Organ (15), und dass sich die vertieften Teile (31) gegenüber den Enden des internen und externen elastischen Organs (16, 15) derart erstrecken, dass sie Auflageoberflächen dieser Enden bilden.

6. Drehungsunterdrückungsvorrichtung (1) nach der Einheit der Ansprüche 3 und 4, **dadurch gekennzeichnet, dass** jede Führungsunterlegscheibe (7, 8) einen externen Umfang umfasst, dessen radialer Querschnitt eine allgemeine S-Form derart hat, dass eine radial externe Krempe (28) gebildet wird, deren Innenseite (29) konkav ist und einen Hohlraum (34) abgrenzt, der zu dem ringförmigen Glied (11) gekehrt ist, und radial innere Vertiefungen (31) in Bezug auf die Krempe (28), die dazu bestimmt sind, Auflageanschläge der elastischen Organe (15, 16) zu bilden, wobei die Fenster (18) der Führungsunterlegscheiben (7, 8) radial interne und externe Ränder (37, 38) umfassen, die jeweils radial innerhalb und außerhalb der Vertiefung (31) liegen.

7. Drehungsunterdrückungsvorrichtung (1) nach Anspruch 6, **dadurch gekennzeichnet, dass** die radial externen Ränder (38) der Fenster (18) der Führungsunterlegscheiben (7, 8) auf dem Niveau des Scheitels der externen Krempe (28), die den Hohlraum (34) abgrenzt, liegen, das heißt auf dem Niveau der Zone der Krempe, die von dem ringförmigen Glied (11) am weitesten entfernt ist.

8. Drehungsunterdrückungsvorrichtung nach einem der Ansprüche 1 bis 7, **dadurch gekennzeichnet, dass** jeder externe periphere Rand (30) der Krempe (28) von dem ringförmigen Glied (11) um eine Entfernung, die zwischen 0,5 und 2 mm liegt, beabstandet ist.

9. Drehungsunterdrückungsvorrichtung nach einem der Ansprüche 1 bis 8, **dadurch gekennzeichnet, dass** sich die Krempen (28) der Führungsunterlegscheiben (7, 8) durchgehend auf dem gesamten Umfang der Führungsunterlegscheiben (7, 8) erstrecken.

## Claims

1. Torsion damper (1) for a clutch, in particular of a motor vehicle, comprising a hub (2), a radial annular web (11), two guide washers (7, 8) extending radially on either side of the annular web (11) that are connected fixedly to one another and able to rotate with respect to the annular web (11), the hub (2) being coupled to the annular web (11) or to the guide washers (7, 8), and elastic members (15, 16) and friction means (19, 20) mounted between the guide washers (7, 8) and the annular web (11) to absorb and damp vibrations and rotation irregularities, the annular web (11) and each guide washer (7, 8) comprising apertures (17, 18) for mounting the elastic members (15, 16) that are situated in the vicinity of their external periphery, **characterized in that** each guide washer (7, 8) has an external periphery formed by a lip (28) bent over towards the annular web (11) and of which the internal face (29), directed towards the annular web (11), is intended to support the elastic members (15, 16) during operation, the external peripheral edge (30) of the lip (28) being that region of the guide washer (7, 8) that is closest to the annular web (11).

2. Torsion damper (1) according to Claim 1, **characterized in that** a friction disc (12) is mounted on the annular web (11), the hub (2) being coupled to the guide washers (7, 8).

3. Torsion damper (1) according to Claim 2, **characterized in that** the friction disc (12) is fixed to the annular web (11) by rivets (14), the lip (28) delimiting at least one cavity (34) extending circumferentially over all or part of the guide washer (7, 8) and directed towards the annular web (11), the rivets (14) being housed in the said cavity (34) or situated opposite the said cavity (34).

4. Torsion damper (1) according to one of Claims 1 to 3, **characterized in that** each guide washer (7, 8) comprises portions (31) which are recessed in the direction of the annular web (11), extend between the circumferential ends (36) of the apertures (18) in the guide washer (7, 8) and form supports for the elastic members (15, 16).

5. Torsion damper (1) according to Claim 4, **characterized in that** the elastic members (15, 16) are mounted in the apertures (17, 18) in groups of at least two coaxial elastic members, respectively one internal elastic member (16) and one external elastic member (15), and **in that** the recessed portions (31) extend opposite the ends of the said internal and external elastic members (16, 15) so as to form support surfaces for these ends.

6. Torsion damper (1) according to Claims 3 and 4 together, **characterized in that** each guide washer (7, 8) has an external periphery of which the radial cross section has a general S shape so as to form a radially external lip (28), the internal face (29) of which is concave and delimits a cavity (34) directed towards the annular web (11), and recesses (31) which are radially internal with respect to the said lip (28) and intended to form support stops for the elastic members (15, 16), the apertures (18) in the guide washers (7, 8) having radially internal and external edges (37, 38) situated respectively radially inside and outside the said recess (31).

7. Torsion damper (1) according to Claim 6, **characterized in that** the radially external edges (38) of the apertures (18) in the guide washers (7, 8) are situated at the apex of the external lip (28) delimiting the cavity (34), that is to say at that region of the lip that is spaced furthest apart from the annular web (11).

8. Damper according to one of Claims 1 to 7, **characterized in that** the external peripheral edge (30) of the lip (28) is spaced apart from the annular web (11) by a distance of between 0.5 and 2 mm.

9. Torsion damper according to one of Claims 1 to 8, **characterized in that** the lips (28) of the guide washers (7, 8) extend continuously over the whole circumference of the guide washers (7, 8).
